# EUROPÄISCHE PATENTSCHRIFT

(11) **EP 0 665 698 B1**
(45) Veröffentlichungstag und Bekanntmachung des Hinweises auf die Patenterteilung: **15.12.1999**
(21) Anmeldenummer: 95100634.5
(22) Anmeldetag: 18.01.1995
(51) Int. Cl.: H04M 3/24, H04Q 3/545

(54) **Verfahren zur Durchführung des Wiederanlaufs der peripheren Prozessoren der Steuerung eines Fernmeldevermittlungssystems**
Restart procedure for the peripheral processors controlling a telecommunications system
Procédé de reprise des processeurs périphériques pour le contrôle d'un système de télécommunications

(30) Priorität: 28.01.1994 DE 4402585
(43) Veröffentlichungstag der Anmeldung: 02.08.1995
(73) Patentinhaber: SIEMENS AKTIENGESELLSCHAFT, 80333 München (DE)
(72) Erfinder: Herr, Georg, Ing., A-7032 Sigless (AT); Schneider, Heinrich, Dipl.-Phys., D-82152 Martinsried (DE); Schmidt, Reinhold, Dipl.-Math., D-85305 Jetzendorf (DE)

(56) Entgegenhaltungen:
- DE-A- 3 824 492
- US-A- 4 451 708
- US-A- 5 001 741

## Beschreibung

Die Erfindung betrifft ein Verfahren zur Durchführung des Wiederanlaufs der peripheren Prozessoren der Steuerung eines Fernmeldevermittlungssystems.

Ein solcher Wiederanlauf ist Bestandteil einer sogenannten peripheren Recoveryfunktion, die ihrerseits Teil der Systemsicherungen des Fernmeldevermittlungssystems ist.

Ein solches Recovery hat das Ziel der Wiederinbetriebnahme von Teilsystemen der vermittlungstechnischen Peripherie und umfaßt Anlaufmaßnahmen, die im laufenden Betrieb eine Störung in Form eines Softwarefehlers neutralisieren und das betroffene Teilsystem der zentralen Steuerung des Vermittlungssystems wieder zur Verfügung zu stellen.

Dabei soll die Betriebsbeeinträchtigung so gering wie möglich gehalten werden. Hierzu sind verschiedene Anlaufstufen vorgesehen, die speziell auf eine angenommene Fehlersituation ausgerichtet sind sich von Stufe zu Stufe im Umfang und der Wirkungsbreite der vorzunehmenden Maßnahmen unterscheiden.

Wenn die Maßnahmen einer Stufe die Fehlerauswirkungen nicht vollständig beseitigen, wird die nächsthöhere Stufe wirksam.

Auch beim Eintreten bestimmter Bedingungen, wie z.B.dann, wenn innerhalb einer Überwachungszeit an sich eine niedrigere Stufe rechtfertigende Fehler in bestimmter Anzahl auftreten, kommt es zu einem Übergang zu der nächthöheren Stufe, zu einer sogenannten Eskalation.

Die niedrigste Anlaufstufe kommt in Frage, wenn die Anwenderprogramme der Peripherie einen Softwarefehler entdecken, den sie selbst beheben können. Ein solcher Fehler kann beispielsweise in der Inkonsistenz von transienten Daten liegen. Nach Behebung des Fehlers setzt das fehlererkennende Programm seinen Programmablauf fort.

Bei höheren Anlaufstufen, die in Frage kommen, wenn Softwarefehler Auswirkungen auf mehrere periphere Anwenderprogramme haben, erfolgt ein Rücksetzen der betreffrenden peripheren Einrichtung, Neustarten des Organisationsprogramms der peripheren Einrichtung und die Wiederaufnahme des Vermittlungsbetriebs. In noch höheren Anlaufstufen, die durch eine Eskalation aus einer nächstniedrigeren Stufe oder aber festgestellter Inplausibilitat semipermanenter Daten angestoßen werden, erfolgt zusätzlich ein Neuladen semipermanenter Daten von der zentralen Steuerung aus. In den genannten Zusammenhängen laufen entsprechende Initialisierungsprogramme ab.

Die erwähnte Auswahl einer Anlaufstufe und die Überwachung des Ablaufs derselben, erfolgt durch eine Recovery-Steuerung.

Bisher wird zur Durchführung eines Recovery das Betriebssystem durch verschiedene Steuervariablen manipuliert, um nicht benötigte Funktionen zu verhindern. Außerdem wird durch Nichtunterbrechbarkeit des Recoveryprogramms verhindert, daß unerlaubte Funktionen gestartet werden. Ferner werden die Initialisierungsprozeduren nicht durch das Betriebssystem gesteuert abgearbeitet, sondern aufgrund entsprechender Aufrufe, die im Recoveryprogramm fest programmiert sind.

Bei dieser Lösung besteht eine starke Abhängigkeit zwischen Recoveryprogramm, Betriebssystem und Initialisierungsprogrammen. Da sich das Recoveryprogramm nicht unterbricht, können wichtige Funktionen, wie Bestandteile der sonstigen Sicherungstechnik und die Meldungsbearbeitung nicht ablaufen. Bei einer Verschachtelung von Recoveries wobei ein Recovery gestartet wird, wenn bereits ein Recovery läuft, kann es zu Störungen des ordnungsgemäßen Ablaufs kommen, die z.B. darin liegen, daß falsche Anlaufstufen gewählt werden oder daß Indizien der Fehlerursachen verfälscht oder zerstört werden.

Die Aufgabe der Erfindung besteht darin, ein Verfahren zur Durchführung von peripheren Recoveries anzugeben, das einen kontrollierten Ablauf gestattet, ohne daß die vorstehend aufgezeigten Probleme auftreten.

Die Aufgabe wird durch die im Kennzeichen des Patentanspruchs angegebenen Verfahrensmerkmale gelöst.

Aufgrund der erfindungsgemaßen Verwendung einer reduzierten Betriebssystemsteuertabelle (Master Scheduler) kann die Funktion der Sicherungstechnik und der Meldungsbearbeitung während des Recovery gewährleistet werden. Ferner ist für eine ordnungsgemäße Bearbeitung auch verschachtelter Recoveries gesorgt, da nunmehr die Initialisierungsprozeduren durch das Betriebssystem abgearbeitet werden.

Nachstehend wird das erfindungsgemäße Verfahren anhand eines Ausführungsbeispiels unter Bezugnahme auf eine Zeichnung noch näher erläutert.

In der Zeichnung zeigen:

Figur 1 die Struktur eines Fernmeldevermittlungssystems, bei dessen Peripherie das erfindungsgemäße Verfahren zur Anwendung kommen kann.

Figur 2 die Standard-Betriebssystemsteuertabelle einer peripheren Einheit eines solchen Vermittlungssystems.

Figur 3 die erfindungsgemäß vorgesehene reduzierte Betriebssystemsteuertabelle.

Figur 4 eine graphische Darstellung des Ablaufs des erfindungsgemaßen Verfahrens.

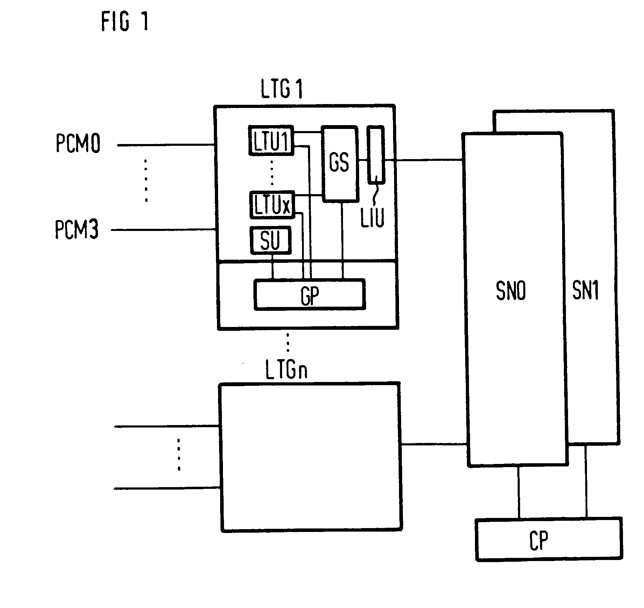

Die in Figur 1 dargestellte mögliche Struktur einer digitalen Zeitmultiplex-Fernsprechvermittlungsstelle zeigte eine Reihe von Anschlußgruppen LTG1 bis LTGn, ein gedoppeltes Koppelnetz SNO/SN1, sowie einen Koordinationsprozessor CP.

Die Anschlußgruppen LTG1 bis LTGn bilden die Schnittstelle zwischen der analogen oder digitalen Umgebung der Vermittlungsstelle und dem Koppelnetz. An sie sind demnach gegebenenfalls unter Zwischenschaltung einer nicht dargestellten konzentrierenden digitalen Leitungseinheit mit Teilnehmern verbindende Teilnehmerleitungen und/oder mit anderen Vermittlungsstellen verbindende Verbindungsleitungen PCM angeschlossen.

Die Anschlußgruppen enthalten als wesentliche Bestandteile, wie bei der Anschlußgruppe LTG1 im einzelnen gezeigt, Anschlußeinheiten LTU1 bis LTUx, die ihrerseits die hier nicht dargestellten Teilnehmersätze oder Leitungssätze enthalten, ferner einen Gruppenkoppler GS, eine Schnittstelleneinheit LTU, die die Schnittstelle zwischen der Anschlußgruppe und dem Koppelfeld darstellt, eine Signaleinheit SU, sowie einen Gruppenprozessor GP, der die genannten Einheiten steuert und darüberhinaus über die Teilnehmer- oder Verbindungsleitungen empfangene Wählinformationen verarbeitet und im Zusammenhang mit dem Aufbau und der Auslösung von Verbindungen mit dem Koordinationsprozessor CP in Steuerzeichenaustausch steht.

Der durch das erfindungsgemäße Verfahren gesteuerte Wiederanlauf betrifft periphere Prozessoren der Steuerung eines solchen Vermittlungssystems, wie sie die erwähnten Gruppenprozessoren GP darstellen. Es kann jedoch auch den Wiederanlauf von Prozessoren betreffen, die Bestandteil der erwähnten digitalen Leitungseinheit sind.

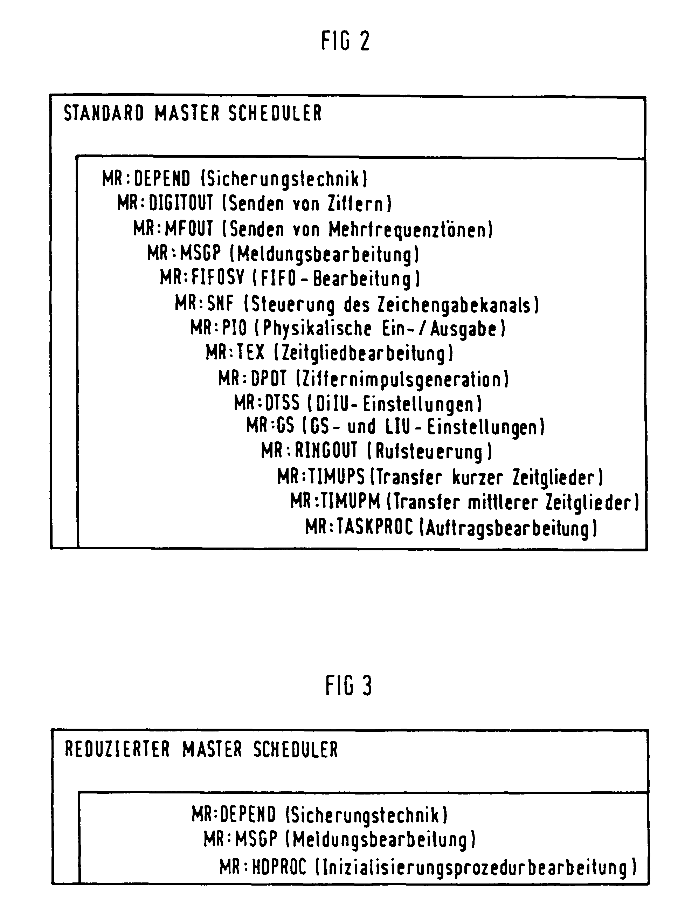

Dem Betrieb der Anschlußgruppen LTG liegt ein Betriebssystem zugrunde, das mit einer Betriebssteuertabelle arbeitet, wie sie in Figur 2 dargestellt ist und die eine Aufstellung einer Bearbeitungsreihenfolge der im Zustand "bereit" befindlichen Prozesse zeigt.

Zum Zwecke der Durchführung des erfindungsgemäßen Verfahrens wird mit einer Betriebssystemvariante gearbeitet, die dadurch entsteht, daß die Betriebssteuertabelle gemäß Figur 2 gegen eine Betriebssystemsteuertabelle ausgetauscht wird, wie sie in Figur 3 dargestellt ist. Diese reduzierte Betriebssystemsteuertabelle enthält von den Prozessen der Standard-Betriebssystemsteuertabelle lediglich noch die Prozesse der Sicherungstechnik und der Meldungsbearbeitung, darüberhinaus jedoch Prozesse der Initialisierungsprozedurbearbeitung.

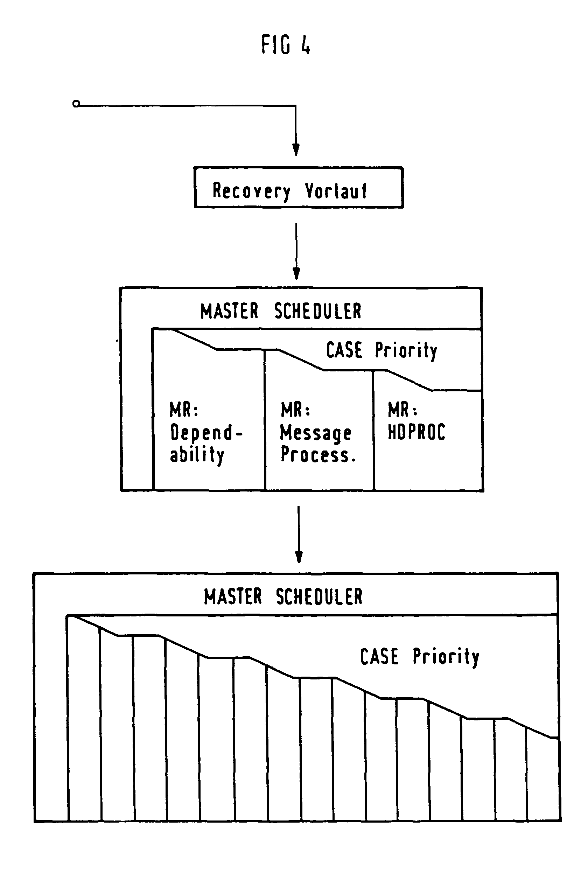

Wenn der Anstoß zu einem Recovery vorliegt, der durch einen Aufruf aus Organisations- oder Sicherungsprogrammen der Anschlußgruppe stammen kann, dann wird, wie die Figur 4 zeigt, zunächst ein Recoveryvorlauf abgewickelt, in dem Betriebsmittel für die Meldungsbearbeitung bereitgestellt werden und dann wird die erwähnte reduzierte Betriebssystemsteuertabelle geladen.

Da nunmehr die Initialisierung, d.h. der Wiederanlauf der Prozessoren der Anschlußgruppen und gegebenenfalls das Laden von semipermanenten Daten in Speicher der dezentralen Steuerung unter der Steuerung des Betriebssystems erfolgt, ist gewährleistet, daß auch verschachtelte Recoveries korrekt bearbeitet werden.

Die Funktion der Sicherungstechnik und der Meldungsbearbeitung sind gewährleistet, da sie nunmehr auch während eines Recovery durch das Betriebssystem gestartet werden können, indem sie Bestandteil der reduzierten Betriebssystemsteuertabelle sind.

## Patentansprüche

1. Verfahren zur Steuerung des Wiederanlaufs der peripheren Prozessoren der Steuerung eines Fernmeldevermittlungssystems **dadurch gekennzeichnet,** daß zur Durchführung des Wiederanlaufs das Betriebssystem der peripheren Steuerung in einer geänderten Variante arbeitet, die dadurch erhalten wird, daß eine die Ursprungsversion bestimmende Standard-Betriebssteuertabelle ersetzende reduzierte Betriebssteuertabelle geladen wird, die im wesentlichen nur noch Prozesse der Sicherungstechnik und der Meldungsbearbeitung sowie Prozesse der Initialisierungsprozedurbearbeitung enthalten, und daß nach Abwicklung des Wiederanlaufs wieder die Standard-Betriebssystemsteuertabelle geladen wird.

## Claims

1. Method for controlling the restarting of the peripheral processors for controlling a telecommunications switching system, characterized in that, in order to carry out the restarting procedure, the operating system of the peripheral controller operates in a changed variant, which is obtained in that a reduced operation control table is loaded which replaces the standard operation control table that governs the original version and essentially now contains only processes relating to security/safety technology and message processing as well as initialization procedure processing processes, and in that the standard operating system control table is loaded once again after the restarting procedure has been completed.

## Revendications

1. Procédé de commande de la reprise des processeurs périphériques de la commande d'un système de télécommunications, caractérisé en ce ce que, pour mettre en oeuvre la reprise du système d'exploitation de la commande périphérique, on travaille dans une variante modifiée, qui est obtenue par le fait qu'il est chargé une table de commande de fonctionnement réduite, qui remplace une table de commande de fonctionnement normalisée déterminant la version d'origine et qui ne contient plus essentiellement que des opérations de la technique de protection et du traitement des messages ainsi que des opérations du traitement des procédures d'initialisation, et en ce que la table de commande de systèmes d'exploitation normalisée est rechargée après traitement de la reprise.
